# EUROPÄISCHE PATENTSCHRIFT

(11) **EP 1 369 266 B1**
(45) Veröffentlichungstag und Bekanntmachung des Hinweises auf die Patenterteilung: **27.09.2006**
(21) Anmeldenummer: 03450094.2
(22) Anmeldetag: 17.04.2003
(51) Int. Cl.: B60D 1/06, B60D 1/60

(54) **Kupplungsvorrichtung**
Coupling device
Dispositif d'accouplement

(30) Priorität: 03.06.2002 AT 8412002
(43) Veröffentlichungstag der Anmeldung: 10.12.2003
(73) Patentinhaber: SCHARMÜLLER GESELLSCHAFT M.B.H. & CO.KG, A-4870 Vöcklamarkt (AT)
(72) Erfinder: Scharmüller, Erika, 4870 Vöcklamarkt (AT)
(74) Vertreter: Hübscher, Helmut

(56) Entgegenhaltungen:
- DE-A- 4 314 810
- DE-C- 929 107
- GB-A- 300 750
- GB-A- 2 251 838
- US-A- 2 308 613

## Beschreibung

Die Erfindung bezieht sich auf eine Kupplungsvorrichtung zwischen einem Zugfahrzeug und einem Anhänger mit einer auf einem Kupplungsträger des Zugfahrzeuges angeordneten Kupplungskugel und einer die Kupplungskugel von oben umfassenden, anhängerseitigen Kugelpfanne, wobei zwischen dem Pfannenrand der Kugelpfanne und dem Kupplungsträger der Kupplungskugel eine Dichtung vorgesehen ist.

Kupplungsvorrichtungen mit einer Kupplungskugel erlauben vergleichsweise hohe Verschwenkbewegungen zwischen Zugfahrzeug und Anhänger, unterliegen aber insbesondere in staubiger Umgebung, wie sie beispielsweise bei Ackerschleppern auf Feldern od. dgl., vorkommt, einem erhöhten Verschleiß, da in Folge der Verschwenkbewegungen zwischen Kupplungskugel und Kugelpfanne stets beispielsweise als Schleifmittel wirkender Mineralstaub in den Bereich zwischen Kupplungskugel und Kugelpfanne gelangt und dort einen Materialabrieb verursacht. Dies führt dazu, daß die bekannten Kugelkupplungen unter starker Belastung und staubiger Umgebung einem hohen Verschleiß unterliegen und des öfteren ausgewechselt werden müssen, was mit einem erheblichen Kostenaufwand und mit Standzeiten der Zugfahrzeuge und Anhänger verbunden ist. Um dies zu vermeiden, ist es bekannt (GB 300 750 A) zwischen dem Pfannenrand der Kugelpfanne und dem Kupplungsträger der Kupplungskugel eine Dichtung in Form einer Manschette vorzusehen. Diese Manschette ist auf einen Ansatz am Kupplungsträger aufgeschoben und mit dem Kupplungsträger verschraubt. Zudem ist eine sich am Kupplungsträger abstützende Schraubenfeder vorgesehen, welche die Manschette gegen den kegelstumpfförmigen Pfannenrand preßt. Ein Wechsel einer verschlissenen Manschette ist nur umständlich möglich.

Der Erfindung liegt daher die Aufgabe zugrunde, eine Kugelkupplung der eingangs geschilderten Art zu schaffen, welche Kugelkupplung sich durch eine Erhöhung der Standzeit mit einfachen Mitteln und eine Verringerung des Verschleißes auszeichnet.

Die Erfindung löst diese Aufgabe dadurch, daß die Dichtung ein elastisch verformbarer Dichtungsring ist, der einerseits am Pfannenrand und anderseits am Kupplungsträger unter Vorspannung anliegt.

Dieser elastisch verformbare Dichtungsring schirmt die Gleitflächen von Kugelpfanne und Kupplungskugel mit einfachen Mitteln sicher von der Umgebung ab, so daß keine einen Verschleiß beschleunigenden bzw. bewirkenden Materialien wie Mineralstaub od. dgl. in den Bereich zwischen Kupplungskugel und Kugelpfanne gelangen können. Zugleich verhindert der Dichtungsring ein Austreten von Schmiermittel aus der Kupplungsvorrichtung, wobei die gute Beweglichkeit der Kupplungsvorrichtung nicht eingeschränkt wird und die Geländegängigkeit der Zugfahrzeug-Anhängerkombination in vollem Umfang erhalten bleibt. Mit der Erfindung wird die Lebensdauer einer Kupplungsvorrichtung aus Kupplungskugel und Kugelpfanne mit einfachen Mitteln wesentlich erhöht. Dabei ist allerdings erfindungswesentlich, daß der Dichtungsring elastisch verformbar ist und unter Vorspannung am Kupplungsträger anliegt, so daß auch bei maximalen Verschwenkbewegungen zwischen Kupplungskugel und Kugelpfanne stets eine sichere Abdichtung der Gleitflächen zur Umwelt gewährleistet ist. Bei der Materialwahl für den Dichtungsring ist darauf zu achten, daß das Material selber zu keinem Verschleiß an den Gleitflächen beiträgt. Vorteilhafterweise wird ein Material gewählt, welches sogar selbst als Schmiermittel für die Kupplungsvorrichtung wirkt.

Um die Dichtwirkung des Dichtungsringes noch weiter zu erhöhen, wird vorgeschlagen, daß der Innendurchmesser des Dichtungsringes kleiner als der Durchmesser der Kupplungskugel ist. In diesem Fall ist sichergestellt, daß der Dichtungsring im Übergangsbereich zwischen dem Pfannenrand der Kugelpfanne und dem Kupplungsträger an der Gleitfläche der Kupplungskugel anliegt und kein verschleißförderndes Material in diesen Bereich eindringen kann. Es versteht sich von selbst, daß der Dichtungsring eine an die Kupplungsvorrichtung angepaßte Form aufweisen kann, oder er sich aufgrund seiner Verformbarkeit von selbst an die Form der Kupplungsvorrichtung anpaßt.

Für besonders hoch belastete Kupplungsvorrichtungen ist es vorteilhaft, wenn die Kupplungskugel innerhalb der Kugelpfanne mit Hilfe eines der Kupplungskugel zugeordneten Niederhalters verriegelbar ist, der die Kugelpfanne und den Dichtungsring außen umfaßt. Damit ist sichergestellt, daß die Gleitflächen von Kupplungskugel und Kugelpfanne hermetisch gegenüber der Umwelt abgedichtet sind. In weniger kritischen Bereichen, also für weniger belastete Kupplungen, kann allerdings auch eine herkömmliche Kugelpfanne verwendet werden, bei der der Niederhalter der Kugelpfanne zugeordnet ist und auf die Kupplungskugel wirkt.

In der Zeichnung ist die erfindungsgemäße Kugelkupplung schematisch dargestellt. Es zeigen
- Fig. 1: eine Kugelkupplung in teilweise geschnittener Seitenansicht,
- Fig. 2: die Kugelkupplung aus Fig. 1 in Vorderansicht,
- Fig. 3 und 4: die Kugelkupplung aus Fig. 1 mit gegenüber der Kupplungskugel verschwenkter Kugelpfanne um eine Quer- und um eine Längsachse.

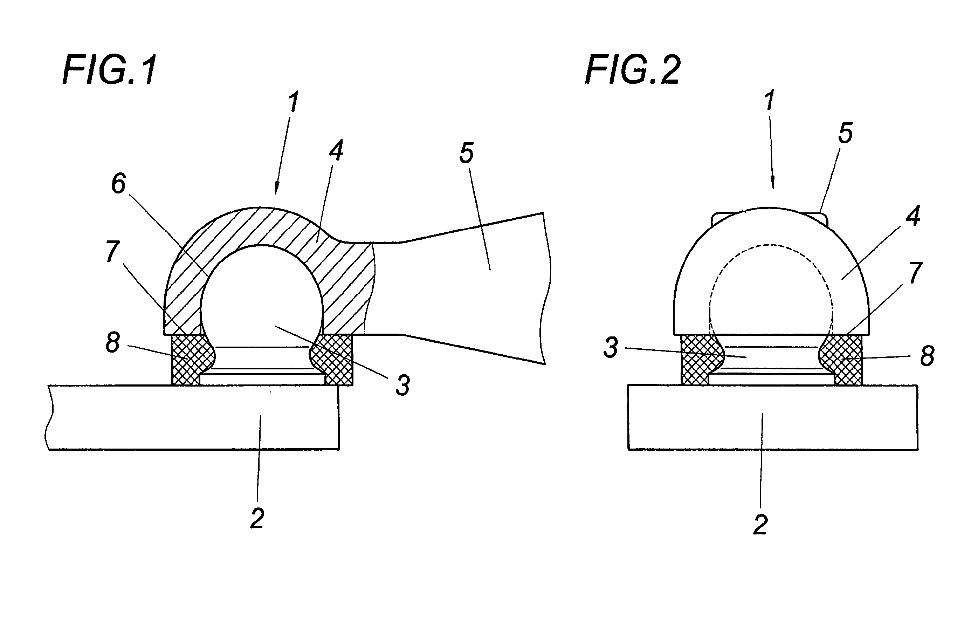

Eine erfindungsgemäße Kupplungsvorrichtung 1 zwischen einem nicht näher dargestellten Zugfahrzeug und einem ebenfalls nicht näher dargestellten Anhänger umfaßt eine auf einem Kupplungsträger 2 angeordnete Kupplungskugel 3 und eine die Kupplungskugel 3 von oben umfassende Kugelpfanne 4. Der Anhänger wird über ein an die Kugelpfanne 4 angeformtes Stielteil 5 angelenkt. Um den Verschleiß an den Gleitflächen 6 zwischen Kupplungskugel 3 und Kugelpfanne 4 zu verringern, ist zwischen dem Pfannenrand 7 der Kugelpfanne 4 und dem Kupplungsträger 2 der Kupplungskugel 3 ein elastisch verformbarer Dichtungsring 8 angeordnet. Der Dichtungsring 8 liegt unter Vorspannung einerseits am Pfannenrand 7 und anderseits am Kupplungsträger 2 an, so daß die Gleitflächen 6 auch bei maximaler Auslenkung zwischen Kupplungskugel 3 und Kugelpfanne 4 aus einer in den Fig. 1 und 2 dargestellten neutralen Mittellage, stets hermetisch gegenüber der Umwelt abgedichtet wird und ein Eindringen von verschleißfördernden Materialien mit einfachen Mitteln verhindert wird.

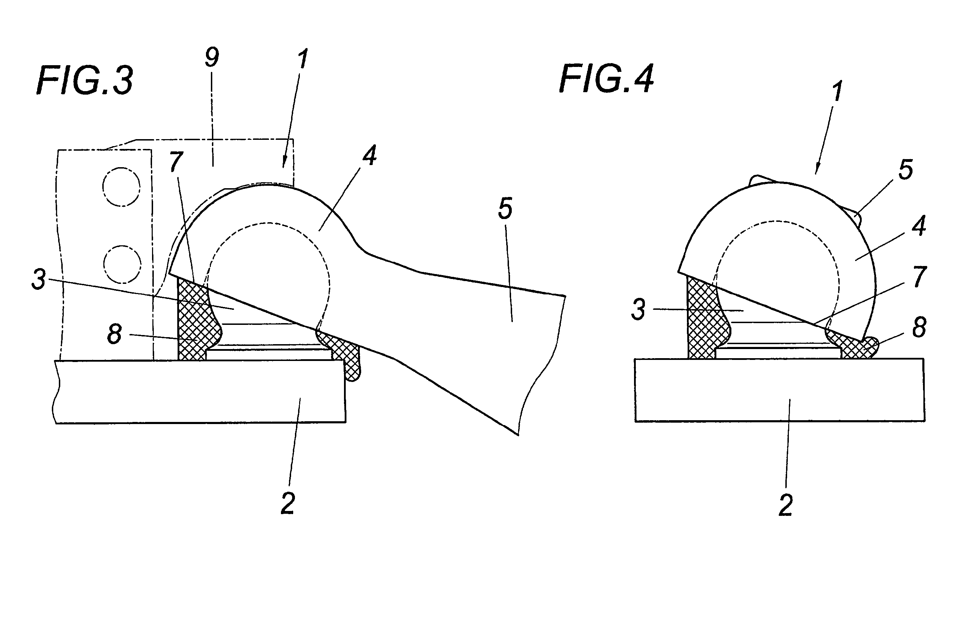

Für besonders hoch belastete Kupplungen ist die Kupplungskugel 3 innerhalb der Kugelpfanne 4 mit Hilfe eines der Kupplungskugel zugeordneten Niederhalters 9 verriegelbar (Fig. 3).

## Patentansprüche

1. Kupplungsvorrichtung (1) zwischen einem Zugfahrzeug und einem Anhänger mit einer auf einem Kupplungsträger (2) des Zugfahrzeuges angeordneten Kupplungskugel (3) und einer die Kupplungskugel (3) von oben umfassenden, anhängerseitigen Kugelpfanne (4), wobei zwischen dem Pfannenrand (7) der Kugelpfanne (4) und dem Kupplungsträger (2) der Kupplungskugel (3) eine Dichtung vorgesehen ist, **dadurch gekennzeichnet, daß** die Dichtung ein elastisch verformbarer Dichtungsring (8) ist, der einerseits am Pfannenrand (7) und anderseits am Kupplungsträger (2) unter Vorspannung anliegt.

2. Kupplungsvorrichtung nach Anspruch 1, **dadurch gekennzeichnet, daß** der Innendurchmesser des Dichtungsringes (8) kleiner als der Durchmesser der Kupplungskugel (3) ist.

3. Kupplungsvorrichtung nach Anspruch 1 oder 2, **dadurch gekennzeichnet, daß** ein am Kupplungsträger (2) gelagerter Niederhalter (9) für die Kugelpfanne (4) vorgesehen ist, der den Dichtungsring (8) außen umfaßt.

## Claims

1. Coupling device (1) between a tractor and a trailer, comprising a coupling ball member (3) arranged on a coupling carrier (2) of the tractor and a ball cup member (4) on the trailer side enclosing the coupling ball member (3) from above, whereby a seal is provided between the cup member edge (7) of the ball cup member (4) and the coupling carrier (2) of the coupling ball member (3), **characterised in that** the seal is an elastically deformable sealing ring (8) which lies with pre-tensioning on the one hand against the cup member edge (7) and on the other hand against the coupling carrier (2).

2. Coupling device according to claim 1, **characterised in that** the inner diameter of the sealing ring (8) is smaller than the diameter of the coupling ball member (3).

3. Coupling device according to claim 1 or 2, **characterised in that** a holding-down member (9) for the ball cup member (4) mounted on the coupling carrier (2) is provided which externally encloses the sealing ring (8) .

## Revendications

1. Dispositif d'attelage (1) entre un véhicule tracteur et une remorque, avec une boule d'attelage (3) disposée sur un support d'attelage (2) du véhicule tracteur et une auge pour boule (4) située côté remorque, entourant par le dessus la boule d'attelage (3), où entre le bord d'auge (7) de l'auge pour boule (4) et le support d'attelage (2) de la boule d'attelage (3) est prévu un joint d'étanchéité, **caractérisé en ce que** le joint d'étanchéité est une bague d'étanchéité (8) déformable élastiquement, appuyant avec près-contrainte, d'une part, sur le bord d'auge (7) et, d'autre part, sur le support d'attelage (2).

2. Dispositif d'attelage selon la revendication 1, **caractérisé en ce que** le diamètre intérieur de la bague d'étanchéité (8) est inférieur au diamètre de la boule d'attelage (3).

3. Dispositif d'attelage selon la revendication 1 ou 2, **caractérisé en ce qu'**un élément de maintien abaissé (9), monté sur le support d'attelage (2) qui entoure extérieurement la bague d'étanchéité (8), est prévu pour l'auge pour boule (4).
